# EUROPEAN PATENT APPLICATION

(11) **EP 4 831 761 A1**
(43) Date of publication of application: **28.10.2026**
(21) Application number: 26173898.3
(22) Date of filing: 22.04.2026
(51) Int. Cl.: G05B 23/02

(54) **ABNORMALITY DETECTION PROGRAM, ABNORMALITY DETECTION METHOD, AND ABNORMALITY DETECTION DEVICE**

(30) Priority: 23.04.2025 JP 2025071586
(71) Applicant: FUJITSU LIMITED, Kawasaki-shi, Kanagawa 211-8588 (JP)
(72) Inventor: KATO, Takashi, Kawasaki-shi, Kanagawa, 211-8588 (JP)
(74) Representative: Hoffmann Eitle

(57) **Abstract**

A computer is caused to execute processing of detecting a normal system model based on time-series prediction for a monitoring target, comparing a prediction result of running of a normal system by the normal system model and an actual running result of the monitoring target at specific intervals and measuring the amount of change in the monitoring target from the normal system, setting a replacement index on the basis of the measured amount of change; and predicting a timing for replacement or repair of a part of the monitoring target on the basis of the amount of change and the replacement index.

## Description

### FIELD

The present disclosure relates to an abnormality detection program, an abnormality detection method, and an abnormality detection device.

### BACKGROUND

Detection of a failure or abnormality in a machine itself, an entire production line, or the like is an important technique for preventing yield deterioration and the like. Although it is conceivable to arrange a sensor or the like for detecting a failure or abnormality, a large number of sensors or the like are often arranged, and it is difficult to check them all by human eyes. Therefore, there is a technique for automatically detecting a failure or abnormality on the basis of operation information of a machine or the like. In addition, it is preferable that signs of a failure or abnormality be able to be recognized in advance in detection thereof.

Therefore, as a method of recognizing a sign in advance, a method of predicting occurrence of a failure using the failure as a label, for example, is conceivable.

Note that as a technique of abnormality detection, a technique of detecting abnormality using an abnormality degree ratio distribution index indicating how much an abnormality degree ratio index, which is an index for detecting abnormality, is exceeded and issuing an alert, for example, has been proposed.

An example of related-art is described in Japanese Laid-open Patent Publication No. 2019-020982.

However, in the case of the technique of predicting occurrence of a failure using the failure as a label, there is a problem that it is often difficult to collect failure data for the labeling. In a case where a long time has not passed since a machine or a production line is deployed in an operation environment, in particular, the difficulty in collecting failure data is remarkable. Therefore, it is difficult to improve safety of a system by the technique of predicting occurrence of a failure using the failure as a label. In addition, the technique of detecting abnormality using the abnormality degree ratio distribution index is also for detection of abnormality having occurred, and it is difficult to catch an omen thereof and to enhance safety of a system.

It is an object in one aspect an embodiment to provide an abnormality detection program, an abnormality detection method, and an abnormality detection device that enhance safety of a system.

### SUMMARY

According to an aspect of an embodiment, an abnormality detection program causes a computer to execute the following processes. The computer detects a normal system model based on time-series prediction for a monitoring target, compares a prediction result of running of a normal system by the normal system model and an actual running result of the monitoring target at specific intervals, measures the amount of change in the monitoring target from the normal system, sets a replacement index on the basis of the measured amount of change, and predicts a timing for replacement or repair of a part of the monitoring target on the basis of the amount of change and the replacement index.

### BRIEF DESCRIPTION OF DRAWINGS

FIG. 1 is a block diagram of an abnormality detection device;
FIG. 2 is a diagram illustrating an example of collected data;
FIG. 3 is a diagram illustrating an example of time-series feature amount;
FIG. 4 is a diagram illustrating an example of a measurement index table;
FIG. 5 is a diagram illustrating repair timing prediction processing;
FIG. 6 is a diagram illustrating an overall image of abnormality detection;
FIG. 7 is a diagram illustrating an example of an abnormality detection notification screen;
FIG. 8 is a sequence diagram of abnormality detection processing;
FIG. 9 is a flowchart of training processing;
FIG. 10 is a flowchart of the abnormality detection processing;
FIG. 11 is a conceptual diagram of the abnormality detection processing; and
FIG. 12 is a hardware configuration diagram of the abnormality detection device.

### DESCRIPTION OF EMBODIMENT

Preferred embodiments of the present invention will be explained with reference to accompanying drawings. Note that the abnormality detection program, the abnormality detection method, and the abnormality detection device disclosed in the present application are not limited by the following embodiments.

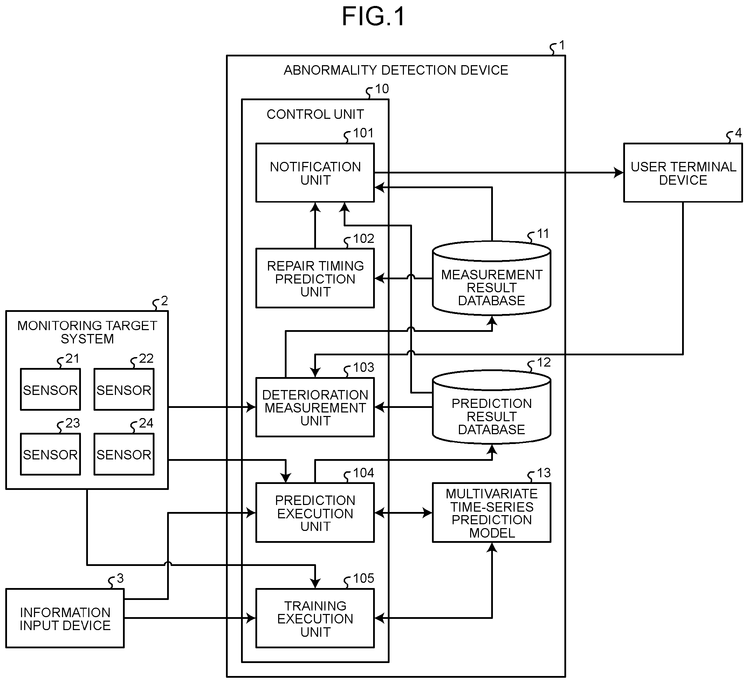

FIG. 1 is a block diagram of the abnormality detection device. An abnormality detection device 1 according to the present embodiment detects abnormality of a monitoring target system 2. The abnormality detection device 1 is connected to, for example, the monitoring target system 2, an information input device 3, and a user terminal device 4. In addition, the abnormality detection device 1 includes a control unit 10, a measurement result database 11, a prediction result database 12, and a multivariate time-series prediction model 13.

The monitoring target system 2 is a monitoring target of abnormality detection such as a machine, a production line system, or the like. Sensors 21 to 24 are arranged in the monitoring target system 2. The sensors 21 to 24 measure an internal state of the monitoring target system 2. The internal state is not particularly limited as long as it is information that enables occurrence of abnormality in the monitoring target system 2 to be predicted and is, for example, an operation voltage, the discharge amount of a specific substance, an internal temperature of the monitoring target system 2, the production amount of products that the monitoring target system 2 produces, and the like. Although the four sensors 21 to 24 are illustrated in FIG. 1, the number is not limited thereto and may be, for example, one.

The multivariate time-series prediction model 13 is a machine learning model that predicts future transition of data using time-series data. The multivariate time-series prediction model 13 can perform prediction in consideration of a causal relationship among data items due to elapse of time. As the multivariate time-series prediction model 13, it is possible to use, for example, autoregressive integrated moving average (ARIMA), a recurrent neural network (RNN), or the like. Here, although the multivariate time-series prediction model 13 is used in the present embodiment, any time-series prediction model that predicts the future using a past feature amount of a target change may be used, and a model handling a univariate, for example, may be used.

The control unit 10 trains the multivariate time-series prediction model 13 in a learning phase, and predicts deterioration measurement and repair timing using the trained multivariate time-series prediction model 13 in an operational phase. The control unit 10 includes a notification unit 101, a repair timing prediction unit 102, a deterioration measurement unit 103, a prediction execution unit 104, and a training execution unit 105.

The training execution unit 105 trains the multivariate time-series prediction model 13 in the learning phase and creates a normal system model that outputs a prediction result in a case where the monitoring target system 2 has operated normally. For example, the training execution unit 105 trains the multivariate time-series prediction model 13 as follows.

The training execution unit 105 receives setting of a normal period during which the monitoring target system 2 is considered to operate normally after the monitoring target system 2 starts to run, from a user in advance. The normal period is a period that is determined on the assumption that the monitoring target system 2 will operate normally in a state where the monitoring target system 2 has started to run in a normal state and not that long time has elapsed yet after the start of the running. The normal period is preferably determined in accordance with a specification, an operating condition, and the like of the monitoring target system 2.

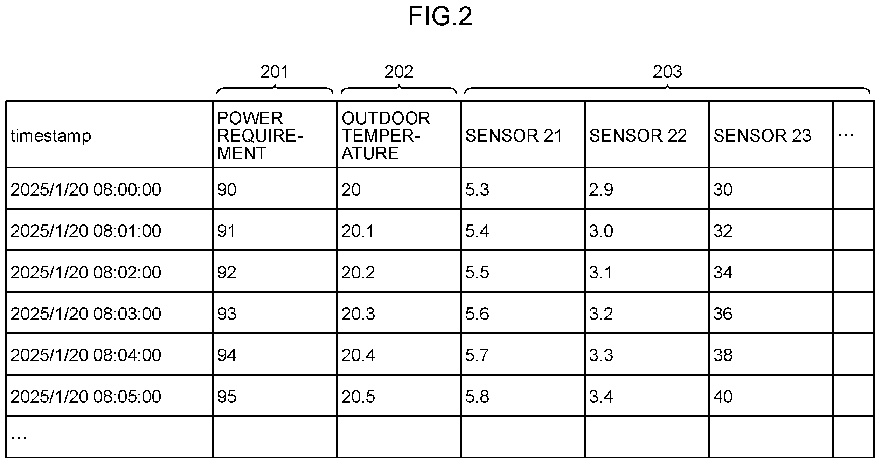

FIG. 2 is a diagram illustrating an example of collected data. The training execution unit 105 starts collection of collected data as illustrated in FIG. 2 from the start of the operation of the monitoring target system 2. Specifically, the training execution unit 105 receives measurement results of measurement of the sensors 21 to 24 with elapse of time after the monitoring target system 2 starts to run, from the monitoring target system 2. For example, the training execution unit 105 collects data 203 which is measurement results of the sensors 21 to 24 at every clock time illustrated in FIG. 2. The measurement results of the measurement of the sensors 21 to 24 are information regarding an actual internal state of the monitoring target system 2 and correspond to an example of "actual running information".

In addition, the training execution unit 105 receives an input of prediction basic information from the information input device 3. As the prediction basic information, any information can be used as long as the information is related to operations of the monitoring target system 2. For example, the prediction basic information can include manipulation information indicating manipulation given to cause the monitoring target system 2 to execute processing. The manipulation information is, for example, the amount of input drug, the amount of power requirement, and the like. Also, the prediction basic information can include environmental information of an installation location of the monitoring target system 2, for example. The environmental information is, for example, a temperature, a humidity, and the like. For example, the training execution unit 105 collects data 201 that is power requirement of the monitoring target system 2 for each clock time illustrated in FIG. 2 and data 202 that is information regarding an outdoor temperature.

The training execution unit 105 collects the prediction basic information until the normal period elapses after the monitoring target system 2 starts to run. Then, after the normal period has elapsed, the training execution unit 105 sets each of the measurement results obtained during the normal period as a teaching label indicating a ground truth. Furthermore, the training execution unit 105 generates a time-series feature amount from the prediction basic information and the measurement results.

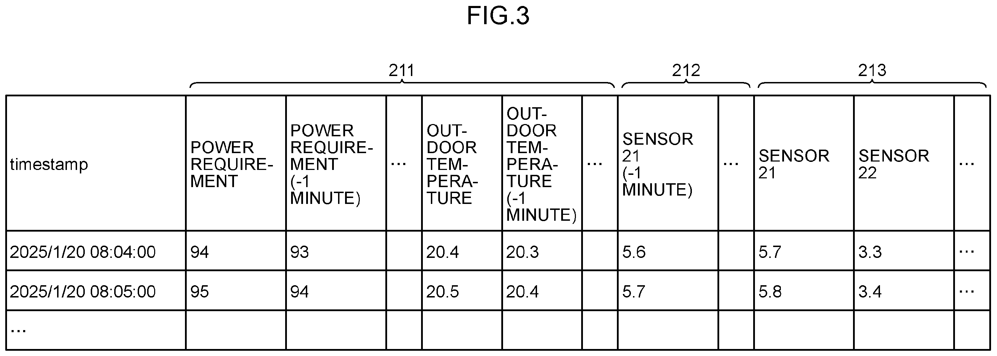

FIG. 3 is a diagram illustrating an example of the time-series feature amount. The training execution unit 105 sets the measurement result 213 of the sensors 21 to 24 at each clock time as a teaching label indicating the internal state of the monitoring target system 2.

Furthermore, the training execution unit 105 generates the time-series feature amount by combining specific prediction basic information corresponding to the teaching label with a lag feature amount, which is prediction basic information before the specific prediction basic information by a predetermined period of time, for example. In the case of FIG. 3, the training execution unit 105 generates the time-series feature amount 211 by combining the lag feature amounts before a predetermined time at intervals of one minute for the power requirement and combining the lag feature amounts before a predetermined time at intervals of one minute for the outdoor temperature. The time-series feature amount 211 is a first explanatory variable when the multivariate time-series prediction model 13 is caused to perform prediction.

The prediction basic information is treated as an exogenous variable. In other words, it is possible to cause the multivariate time-series prediction model 13 to predict how the sensors 21 to 24 behave when a virtual condition and virtual manipulation are input, by performing training using the time-series feature amount obtained from the prediction basic information.

Furthermore, the training execution unit 105 regards the lag feature amount, which is the measurement result before the specific measurement result corresponding to the teaching label by the predetermined time, as a time-series feature amount. In the case of FIG. 3, the training execution unit 105 generates the time-series feature amount 212 by compiling the lag feature amounts before the predetermined time at intervals of one minute from the measurement results of the sensors 21 and 22. The time-series feature amount 212 is a second explanatory variable when the multivariate time-series prediction model 13 is caused to perform prediction. The second explanatory variable is a feature amount generated from the internal state of the monitoring target system 2. In this case, since the measurement result set as the teaching label indicating the internal state of the monitoring target system 2 is information that is not known at the time of the prediction, the measurement result is not included in the second explanatory variable. The measurement results obtained from the sensor 21 and 22 are handled as endogenous variables.

Here, although the lag feature amount is used as the time-series feature amount in the present embodiment, the time-series feature amount is not limited thereto and may be other information as long as the information changes with elapse of time. Furthermore, even in the case where the lag feature amount is used, the time-series feature amount may be a lag feature amount obtained by setting a predetermined time other than one minute, for example.

Next, the training execution unit 105 inputs the time-series feature amount generated from the prediction basic information as the first explanatory variable and the time-series feature amount generated from the measurement results as the second explanatory variable to the multivariate time-series prediction model 13 and causes the multivariate time-series prediction model 13 to predict the internal state of the monitoring target system 2. The training execution unit 105 compares the prediction result output from the multivariate time-series prediction model 13 with the corresponding teaching label, updates a parameter so as to minimize an error, and trains the multivariate time-series prediction model 13.

The training execution unit 105 generates a normal system model that predicts the internal state of the monitoring target system 2 in the normal state through the training of the multivariate time-series prediction model 13 using the collected data in the normal period. In other words, the trained multivariate time-series prediction model 13 is a machine learning model that predicts the internal state in the case where the monitoring target system 2 is in the normal state at a predetermined clock time.

As described above, the training execution unit 105 detects the normal system model through the time-series prediction for the monitoring target system 2. Specifically, the training execution unit 105 trains the multivariate time-series prediction model 13 to generate the normal system model and detects the generated normal system model. The training execution unit 105 trains the multivariate time-series prediction model 13 on the basis of the actual running result acquired from the monitoring target system 2, the manipulation information indicating the manipulation given to the monitoring target system 2, and the environmental information indicating the environment where the monitoring target system 2 is installed. The training execution unit 105 trains the multivariate time-series prediction model 13 on the basis of the actual running result within the predetermined normal period after the monitoring target system 2 starts to run, the manipulation information, and the environmental information.

Returning to FIG. 1, the description will be continued. The notification unit 101, the repair timing prediction unit 102, the deterioration measurement unit 103, and the prediction execution unit 104 execute prediction of the internal state of the monitoring target system 2 and execute prediction of a deterioration measurement and repair timing in the operational phase. Hereinafter, operations of each of the notification unit 101, the repair timing prediction unit 102, the deterioration measurement unit 103, and the prediction execution unit 104 will be described.

After the normal period has elapsed, the prediction execution unit 104 receives the measurement results of the sensors 21 to 24 from the monitoring target system 2. In addition, the prediction execution unit 104 receives an input of the prediction basic information from the information input device 3 after the normal period has elapsed.

Furthermore, the prediction execution unit 104 generates the time-series feature amount from the measurement results and the prediction basic information. The prediction execution unit 104 generates the time-series feature amount by a method similar to that of the training execution unit 105. Then, the prediction execution unit 104 inputs the time-series feature amount to the trained multivariate time-series prediction model 13, which is the normal system model, and causes the multivariate time-series prediction model 13 to predict the internal state of the monitoring target system 2 at a predetermined clock time in the future. Hereinafter, the trained multivariate time-series prediction model 13 which is the normal system model may be simply referred to as a "normal system model". Specifically, the normal system model predicts measurement results of the sensors 21 to 24 at a predetermined clock time in the future. The prediction results obtained by the normal system model indicate the internal state predicted to be obtained on the assumption that the monitoring target system 2 is in the normal state. Thereafter, the prediction execution unit 104 stores the prediction results in the prediction result database 12.

The deterioration measurement unit 103 receives setting of measurement intervals from the user in advance. Then, the deterioration measurement unit 103 executes the following deterioration measurement processing at the designated measurement intervals.

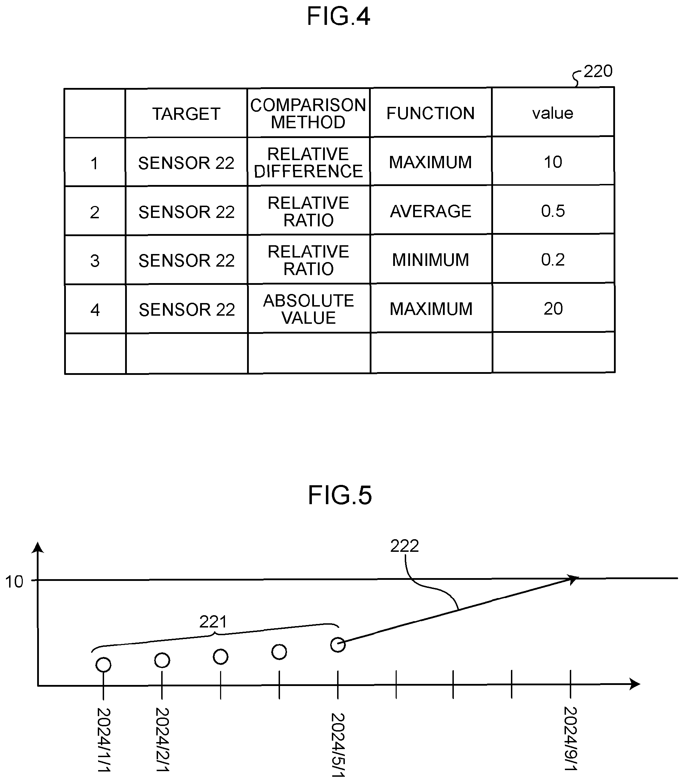

The deterioration measurement unit 103 receives information regarding measurement indexes, which are indexes in deterioration measurement and the repair timing measurement, from the user terminal device 4 and sets the designated measurement indexes as indexes in the deterioration measurement and repair timing prediction. FIG. 4 is a diagram illustrating an example of a measurement index table. Examples of the measurement indexes in the present embodiment include a comparison method, a function, a value corresponding to a threshold value for determining occurrence of abnormality, and the like illustrated in a measurement index table 220 in FIG. 4.

Each index in the measurement index table 220 is information for the predetermined period as a target. For example, a relative difference designated as the comparison method is a relative difference for each clock time in a predetermined period between a prediction result by the normal system model and an actual measurement result. In addition, the maximum value designated as the function is a function for extracting the maximum value of values at each clock time calculated by the corresponding comparison method. In addition, the value is a threshold value at which it is determined that abnormality has occurred when a value given by the corresponding comparison method and the function has exceeded the value designated as the value. Since repair such as replacement is performed when abnormality occurs, the value can be regarded as a replacement index for determining whether various kinds of repair including replacement are needed. Hereinafter, the value will be referred to as a "replacement index". For example, the user determines indexes other than the replacement index from among the measurement indexes on the basis of the prediction results and the measurement results obtained by the normal system model and transmits information regarding the determined measurement indexes to the deterioration measurement unit 103.

Returning to FIG. 1, the description will be continued. The deterioration measurement unit 103 sets a measurement index received from the user as an index for the deterioration determination. For example, the deterioration measurement unit 103 generates a measurement index table 220 illustrated in FIG. 4 using the measurement index and uses the generated measurement index table 220 for the deterioration determination. Hereinafter, a period before the measurement index is set after the normal period elapses will be referred to as a measurement index generation period.

After the measurement index generation period has elapsed, the deterioration measurement unit 103 acquires, from the prediction result database 12, the result of predicting the internal state of the monitoring target system 2 at each clock time by the multivariate time-series prediction model 13. In addition, the deterioration measurement unit 103 receives, from the monitoring target system 2, actual measurement results of the sensors 21 to 24 at the clock time as a prediction target.

Then, the deterioration measurement unit 103 calculates a value of each item of the designated measurement index indicated in the measurement index table 220 using the actual measurement results of the sensors 21 to 24 and the measurement values of the sensors 21 to 24 predicted by the normal system model. Next, the deterioration measurement unit 103 saves the calculated value of each item of the measurement index as a result of the deterioration measurement in the measurement result database 11. The calculation of the value of each item of the measurement index corresponds to the deterioration measurement performed by the deterioration measurement unit 103. The deterioration measurement unit 103 may save the measurement index table 220 in the measurement result database 11.

Here, the value of each item of the measurement index is a difference between each actual measurement result and each result of predicting the running of the normal system of the monitoring target system 2 by the normal system model and corresponds to an example of the amount of change in the monitoring target system 2 from the normal system. In other words, the deterioration measurement unit 103 compares the result of predicting the running of the normal system by the normal system model and the actual running result of the monitoring target system 2 at specific intervals and measures the amount of change in the monitoring target system 2 from the normal system.

Next, the deterioration measurement unit 103 checks transition of the calculated value of each item of the measurement index. Then, the deterioration measurement unit 103 calculates the replacement index from the transition of the value of each item of the measurement index. The deterioration measurement unit 103 preferably suspends the calculation of the replacement index for a specific period until the value of each item of the measurement index to be used for the calculation of the replacement index can be sufficiently secured. Then, the deterioration measurement unit 103 sets the calculated replacement index in the measurement index table 220.

In this manner, the deterioration measurement unit 103 sets the replacement index on the basis of the measured amount of change. Specifically, the deterioration measurement unit 103 sets, as the replacement index, a threshold value for the amount of change to determine an operation of the monitoring target system 2 as being abnormal. The deterioration measurement unit 103 calculates and sets the replacement index on the basis of the amount of change in a specific period of time after detection of the normal system model.

Note that although the deterioration measurement unit 103 calculates and sets the replacement index among measurement indexes from the result of the deterioration measurement in the present embodiment, the method of setting the replacement index is not limited thereto. For example, a replacement index may be determined by the user observing comparison between a prediction result of the normal system model and an actual measurement result and discussing with a knowledge holder, and the deterioration measurement unit 103 may receive information regarding the replacement index determined by the user and set the designated information as the replacement index. In addition, the user may determine the replacement index from a change in deterioration information, notify the deterioration measurement unit 103, and cause the deterioration measurement unit 103 to set the replacement index.

The repair timing prediction unit 102 refers to results of the deterioration measurement accumulated in the measurement result database 11. Then, the repair timing prediction unit 102 determines whether or not the prediction of the repair timing using the results of the deterioration measurement accumulated in the measurement result database 11 can be executed. In a case where not that long time has elapsed after the elapse of the measurement index generation period, and the number of results of the deterioration measurement is less than a predetermined number, the repair timing prediction unit 102 determines that it is still difficult to execute the prediction of the repair timing. The predetermined number used for this determination is preferably determined on the basis of a prediction algorithm or the like of the repair timing prediction unit 102. In this case, the repair timing prediction unit 102 waits until the number of results of the deterioration measurement accumulated in the measurement result database 11 becomes equal to or greater than the predetermined number.

On the other hand, if the predetermined number or more results of deterioration measurement have been accumulated in the measurement result database 11, the repair timing prediction unit 102 determines that the prediction of the repair timing can be executed. Then, the repair timing prediction unit 102 acquires the result of the deterioration measurement from the measurement result database 11. Also, the repair timing prediction unit 102 acquires the information regarding the replacement index in the measurement index table 220. For example, the repair timing prediction unit 102 acquires information regarding the replacement index for each measurement index from the measurement index table 220 saved in the measurement result database 11. In addition, the repair timing prediction unit 102 may acquire information regarding the replacement index from the deterioration measurement unit 103.

Then, the repair timing prediction unit 102 executes the prediction of the repair timing at which part replacement or repair is to be performed, using the result of the deterioration measurement and the replacement index. For example, the repair timing prediction unit 102 estimates transition of the measurement index from the result of the deterioration measurement and predicts a timing at which the measurement index exceeds the replacement index as the repair timing. Furthermore, the repair timing prediction unit 102 may specify a part as a target of the replacement or the repair.

In this manner, the repair timing prediction unit 102 predicts the timing of part replacement or repair of the monitoring target system 2 on the basis of the amount of change and the replacement index. Specifically, the repair timing prediction unit 102 estimates transition of the amount of change after the timing at which it is obtained through the measurement of the deterioration measurement unit 103 from the amount of change and predicts the timing at which the amount of change exceeds the replacement index in the estimation result as the repair timing.

FIG. 5 is a diagram illustrating repair timing prediction processing. In FIG. 5, the vertical axis represents a value of a specific measurement index, and the horizontal axis represents elapse of time. Here, a case where the replacement index of a specific measurement index is 10 will be described.

In a case where the prediction timing is 2024/5/1, for example, the repair timing prediction unit 102 acquires a value 221 of a specific measurement index until then from the measurement result database 11. Then, the repair timing prediction unit 102 executes regression analysis using the value 221 to predict the timing at which the value of the specific measurement index exceeds 10, which is the threshold value. For example, the repair timing prediction unit 102 predicts the timing at which a regression line 222 exceeds 10 that is the threshold value set as the replacement index as 2024/9/1. Thereafter, the repair timing prediction unit 102 notifies the notification unit 101 of the predicted timing as the repair timing.

The repair timing prediction unit 102 can perform the repair timing prediction at specific intervals, such as monthly, and notify the notification unit 101 of the result. Also, the repair timing prediction unit 102 may perform the prediction of the repair timing using an algorithm other than the regression analysis.

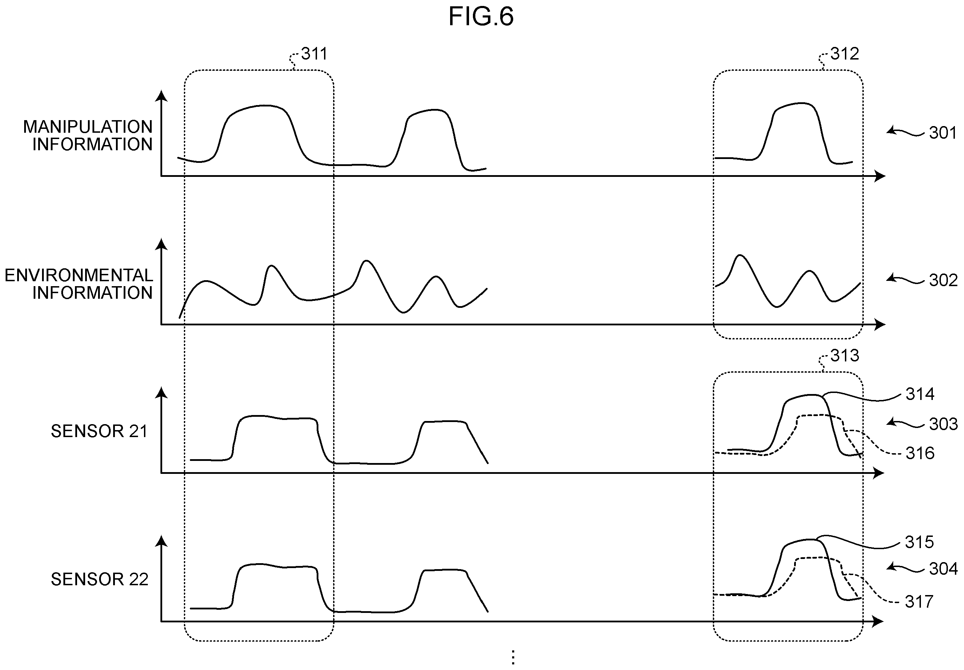

FIG. 6 is a diagram illustrating an overall image of abnormality detection. Here, an outline of abnormality detection processing performed by the repair timing prediction unit 102, the deterioration measurement unit 103, the prediction execution unit 104, and the training execution unit 105 will be collectively described with reference to FIG. 6. A graph 301 of FIG. 6 illustrates transition of manipulation information with elapse of time. A graph 302 illustrates transition of environmental information with elapse of time. A graph 303 illustrates transition of a prediction result and an actual measurement result of the measurement value of the sensor 21 with elapse of time. A graph 304 illustrates transition of a prediction result and an actual measurement result of the measurement value of the sensor 22 with elapse of time. In all of the graphs 301 to 304, the vertical axes represent the value of the manipulation information, the value of the environmental information, the measurement value of the sensor 21, and the measurement value of the sensor 22, respectively and the horizontal axes represent elapse of time.

The training execution unit 105 generates the normal system model by training the multivariate time-series prediction model 13 using collected data illustrated within a range 311 in the normal period. Thereafter, the prediction execution unit 104 uses the multivariate time-series prediction model 13, which is the normal system model, and causes it to predict the measurement values of the sensors 21 to 24.

In a case where the measurement values of the sensors 21 to 24 in the period corresponding to a range 312 are predicted, the prediction execution unit 104 causes the multivariate time-series prediction model 13 to execute prediction using the prediction basic information including the manipulation information and the environmental information before then, for example. The prediction execution unit 104 acquires, for example, results of predicting the measurement values of the sensors 21 and 22 within a range 313. In this case, the prediction execution unit 104 acquires a prediction curve 314 indicating the measurement value of the sensor 21 and a prediction curve 315 indicating the measurement value of the sensor 22 in a case where the monitoring target system 2 has operated normally, that is, as prediction results of the normal system. The prediction execution unit 104 also acquires prediction results for the sensors 23 and 24 in a similar manner.

The deterioration measurement unit 103 acquires an actual measurement curve 316 indicating a measurement value of the sensor 21 and an actual measurement curve 317 indicating a measurement value of the sensor 22 as actual measurement results. Then, the deterioration measurement unit 103 performs deterioration measurement of the sensor 22 by comparing the prediction curve 314 with the actual measurement curve 316 to calculate the measurement index. Also, the deterioration measurement unit 103 performs deterioration measurement of the sensor 23 by comparing the prediction curve 315 with the actual measurement curve 317 to calculate the measurement index. The deterioration measurement unit 103 also performs deterioration measurement for the sensors 23 and 24 in a similar manner.

Then, the repair timing prediction unit 102 estimates transition of deterioration of the sensor 21 from the measurement index of the sensor 21 in the past including the measurement index obtained from the difference or the like between the prediction curve 314 and the actual measurement curve 316 and predicts a repair timing of the sensor 21 from the comparison with the replacement index. Also, the repair timing prediction unit 102 estimates transition of deterioration of the sensor 22 from the measurement index of the sensor 22 in the past including the measurement index obtained from the difference or the like between the prediction curve 315 and the actual measurement curve 317 and predicts a repair timing of the sensor 22 from the comparison with the replacement index. The repair timing prediction unit 102 also predicts the repair timing for the sensors 23 and 24 in a similar manner.

Returning to FIG. 1, the description will be continued. The notification unit 101 transmits the prediction result by the normal system model stored in the prediction result database 12 to the user terminal device 4 and provides it to the user. At this time, the notification unit 101 also provides the actual measurement value corresponding to the prediction result to the user. For example, the notification unit 101 may provide the prediction result of the normal system model and information regarding a change in actual measurement value to the user by using a graph or the like.

The user manipulates the user terminal device 4 and refers to the prediction result by the normal system model and the corresponding actual measurement value. Then, the user can determine the measurement index to detect a change that needs replacement or the like while comparing the prediction result by the normal system model and the corresponding actual measurement value and discussing with a knowledge holder or the like. In a case where the user refers to the change in sensor 22, and the actual measurement value has become lower than the prediction result by the normal system model, for example, the user can determine that an average of a ratio of the actual measurement value to the prediction result by the normal system model is effective for abnormality detection. In this case, the user determines the sensor 22 as the target in the measurement index table 220 illustrated in FIG. 4, the relative ratio as the comparison method, and the average as the function, for example. Then, the user manipulates the user terminal device 4 and notifies the deterioration measurement unit 103 of information regarding the determined measurement index.

In this case, the deterioration measurement unit 103 calculates and accumulates an average of the relative ratio between the measurement result and the prediction result and determines that an alert is to be issued in a case where the average of the relative ratio between the measurement result and the prediction result has reached a half, for example, using the accumulated information. Then, the deterioration measurement unit 103 sets 0.5 as the replacement index. Also, in a case where the user determines the replacement index, the user may determine that an alert is to be issued in a case where the average of the relative ratio between the measurement result and the prediction result has reached a half along with other measurement indexes and notify the deterioration measurement unit 103 of the replacement index of 0.5.

Returning to FIG. 1, the description will be continued. The notification unit 101 transmits results of the deterioration measurement accumulated in the measurement result database 11 to the user terminal device 4 and provides them to the user. At this time, in a case where the results of the deterioration measurement exceed a threshold value, the notification unit 101 may transmit an alert to the user terminal device 4 to provide a notification to the user.

Also, the notification unit 101 receives a notification of the repair timing from the repair timing prediction unit 102. Then, the notification unit 101 transmits the repair timing to the user terminal device 4 and provides the repair timing to the user. In addition, the notification unit 101 may send a push notification or the like to the user terminal device 4 by e-mail or the like in a case where the repair timing is reached within a predetermined period. The predetermined period can be set by the user.

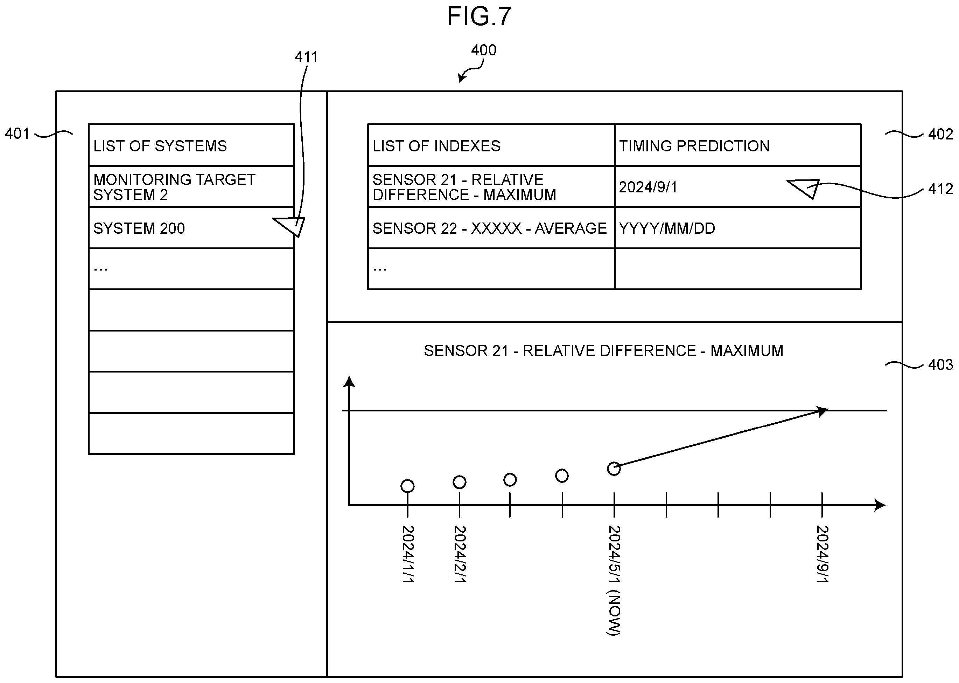

FIG. 7 is a diagram illustrating an example of an abnormality detection notification screen. For example, the notification unit 101 can provide information regarding abnormality detection to the user by generating an abnormality detection notification screen 400 as illustrated in FIG. 7, transmitting it to the user terminal device 4, and causing the user terminal device 4 to display it on a monitor or the like. The user terminal device 4 can provide the abnormality detection information to the user using the notification screen 400 as follows, for example, in accordance with a display procedure of the notification screen 400 given from the notification unit 101.

The notification screen 400 has regions 401 to 403. The user terminal device 4 displays the notification screen 400 in a state where the region 401 is displayed while the regions 402 and 403 are not displayed on the monitor (not illustrated). In the region 401, a list of systems as targets of abnormality detection is displayed. In this state, the user manipulates an input device and selects a system that the user desires to check using a pointer 411. For example, the user selects the monitoring target system 2.

The user terminal device 4 displays the information regarding the value of the measurement index and the repair timing obtained for each measurement index in the region 402 of the notification screen 400 for the monitoring target system 2 selected by the user. The user selects a repair timing that the user desires to check, by manipulating the input device and using the pointer 412. For example, the user selects a repair timing using a maximum value of a relative difference of the sensor 21.

The user terminal device 4 displays detailed information of the prediction of the repair timing selected by the user in the region 403 of the notification screen 400. The user can recognize details of the prediction of the repair timing by checking the detailed information displayed in the region 403. For example, the user can recognize details of the prediction of the repair timing based on the measurement result of the sensor 21. In addition, the user can determine whether or not to repair an abnormal portion assumed from the measurement result of the sensor 21 at the predicted repair timing and perform advance preparation such as arrangement or the like of parts in a case where repair is to be performed.

In this manner, the abnormality detection device 1 detects an omen of occurrence of abnormality using the prediction result using the normal system model and the actual measurement result, instead of the abnormality detection in a case where a threshold value is simply exceeded, and provides a notification to the user. In other words, the abnormality detection device 1 is an improved computer from the technique of abnormality detection or the like using a threshold value.

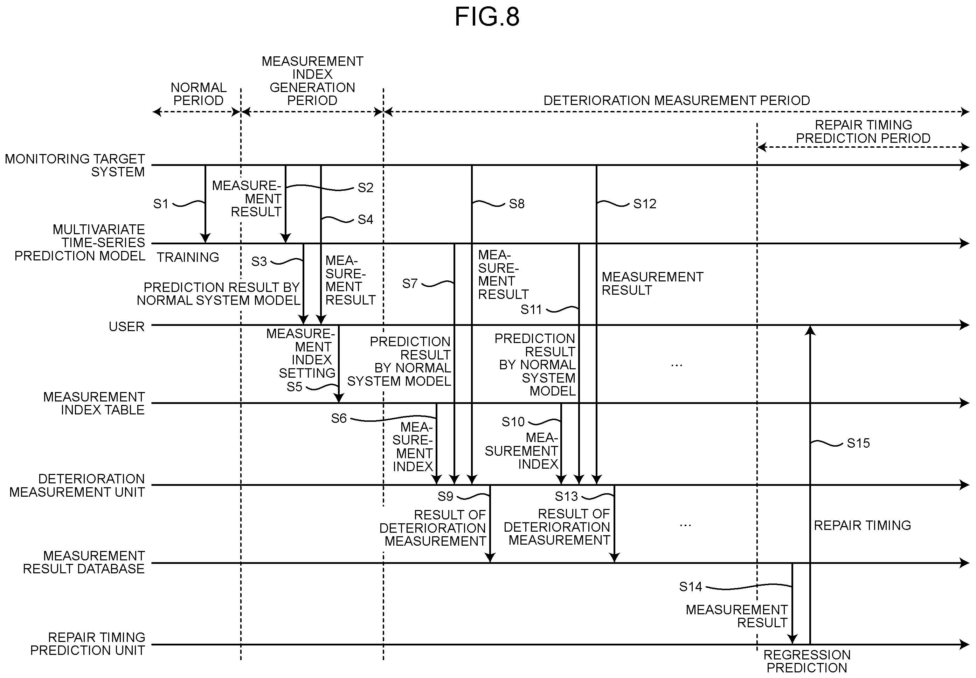

FIG. 8 is a sequence diagram of abnormality detection processing. Next, an overall flow of the abnormality detection processing performed by the abnormality detection device 1 according to the present embodiment will be described with reference to FIG. 8. Although the prediction result by the normal system model is stored in the prediction result database 12 and is referred to by the prediction execution unit 104 here, FIG. 8 illustrates that the prediction result by the normal system model is acquired directly from the multivariate time-series prediction model 13 for easy understanding. In addition, a case where the replacement index is designated by the user will be described here.

The multivariate time-series prediction model 13 is trained using the measurement result indicating the internal state of the monitoring target system 2 during the normal period after the monitoring target system 2 starts to run and the prediction basic information input from the information input device 3 and generates the normal system model (Step S1).

During the measurement index generation period after the normal period has elapsed, the multivariate time-series prediction model 13 that is the normal system model receives an input of the measurement result from the monitoring target system 2 (Step S2). Then, the user receives provision of the prediction result by the normal system model output from the multivariate time-series prediction model 13 (Step S3). Also, the user receives provision of the information regarding the actual internal state of the monitoring target system 2 output from the monitoring target system 2 (Step S4).

The user obtains the sufficient prediction result by the normal system model and the information regarding the actual internal state of the monitoring target system 2, then determines the measurement index, and causes the deterioration measurement unit 103 to set the measurement index in the measurement index table 220 (Step S5). Here, the user can freely determine the measurement index generation period for obtaining sufficient information to determine the measurement index. Note that in a case where the deterioration measurement unit 103 calculates and sets the replacement index, the deterioration measurement unit 103 executes the deterioration measurement in accordance with the measurement index designated by the user and calculates and sets the replacement index from the result of the deterioration measurement.

Once the measurement index is set, the measurement index generation period is ended, and the deterioration measurement period during which the deterioration measurement is performed by the deterioration measurement unit 103 is started. In the deterioration measurement period, the deterioration measurement unit 103 checks the measurement index set in the measurement index table 220 (Step S6). Then, the deterioration measurement unit 103 acquires the prediction result by the normal system model output from the multivariate time-series prediction model 13 (Step S7). Also, the deterioration measurement unit 103 acquires the information regarding the actual internal state of the monitoring target system 2 output from the monitoring target system 2 (Step S8). The deterioration measurement unit 103 executes the deterioration measurement in accordance with the measurement index using the prediction result by the normal system model and the information regarding the actual internal state of the monitoring target system 2. The deterioration measurement unit 103 registers, in the measurement result database 11, the result of the deterioration measurement, such as the difference or the like between the prediction result by the normal system model and the actual internal state of the monitoring target system 2 (Step S9). The deterioration measurement unit 103 repeats similar processing as indicated as an example by Steps S10 to S13.

The repair timing prediction unit 102 refers to the measurement result database 11 and determines whether or not it is possible to predict the repair timing using the accumulated results of the deterioration measurement. If the repair timing prediction unit 102 determines that it is possible to predict the repair timing, then the repair timing prediction period is started. In the repair timing prediction period, the repair timing prediction unit 102 acquires results of the deterioration measurement in the past from the measurement result database 11 (Step S14). Then, the repair timing prediction unit 102 performs regression analysis using the acquired results of deterioration measurement and predicts the repair timing using the replacement index. Then, the repair timing prediction unit 102 notifies the user of the predicted repair timing via the notification unit 101 (Step S15). The user refers to the prediction result of the repair timing to make determination in regard to the repair of the monitoring target system 2.

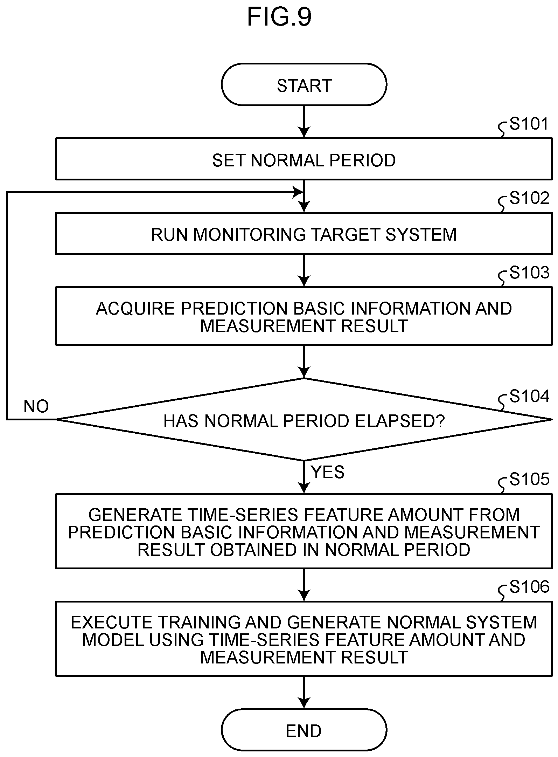

FIG. 9 is a flowchart of training processing. Next, a flow of training processing of the multivariate time-series prediction model 13 performed in the learning phase by the abnormality detection device 1 according to the present embodiment will be described with reference to FIG. 9.

The training execution unit 105 receives setting of the normal period from the user (Step S101).

Next, the monitoring target system 2 runs (Step S102).

Next, the training execution unit 105 acquires the prediction basic information including the manipulation information and the environmental information input from the information input device 3 and the measurement results of the sensors 21 to 24 transmitted from the monitoring target system 2 (Step S103).

Next, the training execution unit 105 determines whether the normal period has elapsed (Step S104). In a case where the normal period has not elapsed (Step S104: negative), the training processing returns to Step S102.

On the other hand, in a case where the normal period has elapsed (Step S104: positive), the training execution unit 105 generates a time-series feature amount from the prediction basic information and the measurement result obtained in the normal period (Step S105).

Next, the training execution unit 105 executes training of the multivariate time-series prediction model 13 and generates the normal system model, using the generated time-series feature amount as an explanatory variable and the measurement result as a teaching label and using the time-series feature amount and the measurement result (Step S106).

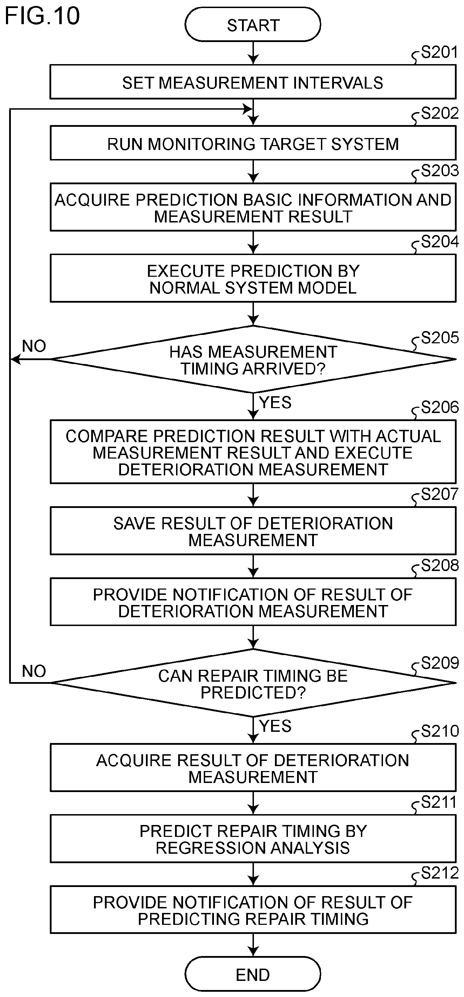

FIG. 10 is a flowchart of the abnormality detection processing. Next, a flow of abnormality detection processing performed in the operational phase by the abnormality detection device 1 according to the present embodiment will be described with reference to FIG. 10.

The deterioration measurement unit 103 receives setting of measurement intervals from the user (Step S201).

The monitoring target system 2 runs (Step S202).

The prediction execution unit 104 acquires the prediction basic information including the manipulation information and the environmental information input from the information input device 3 and the measurement results of the sensors 21 to 24 transmitted from the monitoring target system 2 (Step S203).

Then, the prediction execution unit 104 generates a time-series feature amount from the prediction basic information and the measurement results, inputs the generated time-series feature amount to the multivariate time-series prediction model 13, which is the normal system model, and executes prediction by the normal system model (Step S204). The prediction execution unit 104 saves the prediction result obtained by the normal system model in the prediction result database 12.

The deterioration measurement unit 103 determines whether or not the measurement timing has arrived (Step S205). In a case where the measurement timing has not arrived (Step S205: negative), the abnormality detection processing returns to Step S202.

On the other hand, in a case where the measurement timing has arrived (Step S205: positive), the deterioration measurement unit 103 compares the prediction result with the actual measurement result and executes the deterioration measurement in accordance with the set measurement index (Step S206).

Thereafter, the deterioration measurement unit 103 saves the result of the deterioration measurement in the measurement result database 11 (Step S207).

The notification unit 101 transmits the result of the deterioration measurement saved in the measurement result database 11 to the user terminal device 4 and notifies the user of the deterioration measurement result (Step S208).

The repair timing prediction unit 102 checks the result of the deterioration measurement saved in the measurement result database 11 and determines whether or not it is possible to predict the repair timing (Step S209). In a case where it is still difficult to predict the repair timing (Step S209: negative), the abnormality detection processing returns to Step S202.

On the other hand, in a case where it is possible to predict the repair timing (Step S209: positive), the repair timing prediction unit 102 acquires the result of the deterioration measurement from the measurement result database 11 (Step S210).

Then, the repair timing prediction unit 102 performs regression analysis using the result of the deterioration measurement and executes the prediction of the repair timing on the basis of the replacement index (Step S211).

Thereafter, the repair timing prediction unit 102 transmits the predicted repair timing to the user terminal device 4 via the notification unit 101 and notifies the user of the repair timing (Step S212). The user refers to the prediction result of the repair timing to make determination in regard to the repair of the monitoring target system 2.

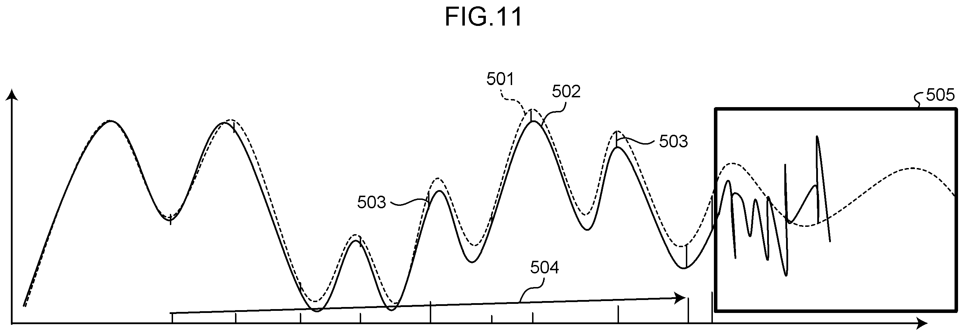

FIG. 11 is a conceptual diagram of the abnormality detection processing. Here, an overall image of the abnormality detection processing performed by the abnormality detection device 1 according to the embodiment will be collectively described with reference to FIG. 11.

The abnormality detection device 1 trains the multivariate time-series prediction model 13 and generates the normal system model for predicting the measurement results of the sensors 21 to 24 in a case where the monitoring target system 2 operates normally. Thereafter, the abnormality detection device 1 can obtain a curve 501 as a prediction result by the normal system model.

In addition, the abnormality detection device 1 can acquire the actual measurement results of the sensors 21 to 24 in the monitoring target system 2 from the monitoring target system 2 and obtain a curve 502 indicating the actual internal state of the monitoring target system 2.

The abnormality detection device 1 calculates a difference 503 between the curve 501 and the curve 502 and presents the difference to the user. FIG. 11 illustrates some examples of the difference 503. Then, the abnormality detection device 1 receives, from the user, setting of the measurement index indicating a degree of the difference 503 at which abnormality is determined.

Thereafter, the abnormality detection device 1 performs the deterioration measurement in accordance with the measurement index using the prediction results and the actual measurement results. Then, the abnormality detection device 1 can calculate transition 504 of the difference 503 by performing regression analysis from the result of the deterioration measurement. Then, the abnormality detection device 1 can estimate the difference 503 in the future from the transition 504 and predict occurrence of abnormality within a range 505, for example. In this manner, the abnormality detection device 1 predicts that the repair timing will arrive within the range 505 and provides a notification to the user. In this manner, the abnormality detection device 1 specifies a change associated with a failure through communication with the user and notifies the user of the timing at which the failure is likely to occur.

As described above, the abnormality detection device 1 according to the present embodiment generates the multivariate time-series prediction model 13 as the normal system model using the measurement result and the prediction basic information collected in the normal period after the monitoring target system 2 starts to run. Then, the abnormality detection device 1 provides the prediction value of the measurement result using the normal system model and sets the measurement index designated by the user. In addition, the abnormality detection device 1 performs the deterioration determination from the prediction result and the actual measurement result using the set measurement index, predicts the repair timing on the basis of the replacement index from the transition of the change in measurement index represented by the result of the deterioration determination, and provides a notification to the user.

According to the abnormality detection technique in the related art, occurrence of abnormality is detected using a threshold value or the like. For a system in which occurrence of abnormality is not allowed, it is possible to reduce damage by making improvement before abnormality occurs, and the method in the related art is thus not a sufficient method to enhance safety of the system.

On the other hand, the abnormality detection device 1 according to the present embodiment can detect a sign of deterioration or the like before abnormality occurs. Then, the abnormality detection device 1 can predict a timing at which replacement or repair is needed from the detected sign, provide a notification to the user, and prompt the user to execute replacement or repair before abnormality occurs. In this manner, the abnormality detection device 1 can contribute to an improvement in safety of the system. In addition, the abnormality detection device 1 can contribute to an improvement in yield and an improvement in customer satisfaction.

### Hardware Configuration

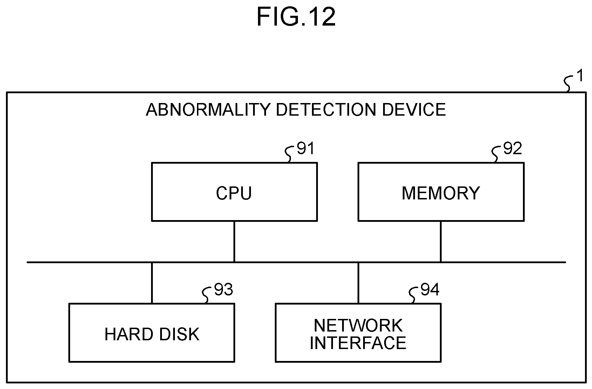

FIG. 12 is a hardware configuration diagram of the abnormality detection device. Next, an example of the hardware configuration to realize each function of the abnormality detection device 1 will be described with reference to FIG. 12.

As illustrated in FIG. 12, the abnormality detection device 1 includes, for example, a central processing unit (CPU) 91, a memory 92, a hard disk 93, and a network interface 94. The CPU 91 is connected to the memory 92, the hard disk 93, and the network interface 94 via a bus. Note that although FIG. 11 illustrates one CPU 91, the abnormality detection device 1 can include a plurality of processors mounted thereon.

The network interface 94 is an interface for communication between the abnormality detection device 1 and an external device. The network interface 94 relays communication between the CPU 91 and the monitoring target system 2, the information input device 3, and the user terminal device 4, for example.

The hard disk 93 is an auxiliary storage device. The hard disk 93 implements the functions of the measurement result database 11 and the prediction result database 12 illustrated as an example in FIG. 1. Also, the hard disk 93 may store the multivariate time-series prediction model 13. Furthermore, the hard disk 93 stores various programs including programs for realizing the functions of the control unit 10 including the notification unit 101, the repair timing prediction unit 102, the deterioration measurement unit 103, the prediction execution unit 104, and the training execution unit 105 illustrated as an example in FIG. 1.

The memory 92 is a main storage device. It is possible to use a dynamic random access memory (DRAM), for example, as the memory 92.

The CPU 91 reads various programs from the hard disk 93, loads the programs into the memory 92, and executes the programs. In this manner, the CPU 91 realizes the functions of the control unit 10 including the notification unit 101, the repair timing prediction unit 102, the deterioration measurement unit 103, the prediction execution unit 104, and the training execution unit 105 illustrated as an example in FIG. 1.

According to an aspect, the present invention can enhance safety of a system.

## Claims

1. An abnormality detection program causing a computer to execute processing of:
detecting a normal system model based on time-series prediction for a monitoring target;
comparing a prediction result of running of a normal system by the normal system model and an actual running result of the monitoring target at specific intervals and measuring the amount of change in the monitoring target from the normal system;
setting a replacement index on the basis of the measured amount of change; and
predicting a timing for replacement or repair of a part of the monitoring target on the basis of the amount of change and the replacement index.

2. The abnormality detection program according to claim 1, wherein the processing of detecting the normal system model includes training a multivariate time-series prediction model to generate the normal system model and detecting the generated normal system model.

3. The abnormality detection program according to claim 2, wherein the processing of detecting the normal system model includes processing of training the multivariate time-series prediction model on the basis of an actual running result acquired from the monitoring target and manipulation information indicating manipulation given to the monitoring target and environmental information indicating an environment where the monitoring target is installed.

4. The abnormality detection program according to claim 3, wherein the processing of detecting the normal system model includes processing of training the multivariate time-series prediction model on the basis of the actual running result within a predetermined normal period after the monitoring target starts to run and the manipulation information and the environmental information.

5. The abnormality detection program according to claim 1,
wherein the processing of setting includes processing of setting a threshold value of the amount of change to determine that an operation of the monitoring target is abnormal as the replacement index, and
the processing of predicting includes processing of estimating, from the amount of change obtained by measurement, transition of the amount of change after a timing of the measurement and predicting a timing at which the amount of change exceeds the replacement index in a result of the estimation as the repair timing.

6. The abnormality detection program according to claim 1, wherein the processing of setting the replacement index includes processing of calculating and setting the replacement index on the basis of the amount of change in a specific period after the normal system model is detected.

7. An abnormality detection method comprising, by an abnormality detection device:
detecting a normal system model based on time-series prediction for a monitoring target;
comparing a prediction result of running of a normal system by the normal system model and an actual running result of the monitoring target at specific intervals and measuring the amount of change in the monitoring target from the normal system;
setting a replacement index on the basis of the measured amount of change; and
predicting a timing for replacement or repair of a part of the monitoring target on the basis of the amount of change and the replacement index.

8. An abnormality detection device comprising:
a training execution unit (105) that detects a normal system model based on time-series prediction for a monitoring target;
a deterioration determination unit (103) that compares a prediction result of running of a normal system by the normal system model and an actual running result of the monitoring target at specific intervals and measures the amount of change in the monitoring target from the normal system, and sets a replacement index on the basis of the measured amount of change; and
a repair timing prediction unit (102) that predicts a timing for replacement or repair of a part of the monitoring target on the basis of the amount of change and the replacement index.
